# EUROPEAN PATENT SPECIFICATION

(11) **EP 1 249 918 B1**
(45) Date of publication and mention of the grant of the patent: **26.10.2005**
(21) Application number: 02007834.1
(22) Date of filing: 08.04.2002
(51) Int. Cl.: H02K 1/27, H02K 1/32

(54) **Rotor for a permanent magnet type electrical machine**
Rotor für eine elektrische Maschine des permanentmagnetischen Typs
Rotor pour une machine électrique du type à aimant permanent

(30) Priority: 09.04.2001 JP 2001110208; 26.03.2002 US 63148
(43) Date of publication of application: 16.10.2002
(73) Proprietor: Kabushiki Kaisha MORIC, Shuuchi-gun, Shizuoka-ken (JP)
(72) Inventor: Anma, Tatsuya, Shuuchi-gun, Shizuoka-ken (JP)
(74) Representative: TBK-Patent

(56) References cited:
- EP-A- 0 854 558
- EP-A- 0 887 908
- EP-A- 1 018 795
- EP-A- 1 094 145
- DD-A- 120 981
- FR-A- 528 970
- US-A- 4 510 409
- US-A- 5 862 686
- US-A- 5 907 206
- US-A- 5 994 804
- PATENT ABSTRACTS OF JAPAN vol. 2000, no. 09, 13 October 2000 (2000-10-13) & JP 2000 184644 A (MATSUSHITA ELECTRIC IND CO LTD), 30 June 2000 (2000-06-30)

## Description

This invention relates to a rotor for a permanent magnet type rotary electrical machine having permanent magnets adapted to cooperate with the coils formed on armatures of a stator.

In both motors and generators such as those used in vehicles such as motorcycles, a rotary machine has been known in which permanent magnets fixed to a rotor are rotated around a stator. In such a machine not only does the rotor rotate at high speed, but also the permanent magnets are subjected to repeated attractive and repulsive forces between the magnets and the coils of the stator. This can and does cause generation of vibration and noise. Because the quality and strength of permanent magnets gas improved and permanent magnets with very large magnetic flux density are now used, the attractive and repulsive forces are increased further.

To prevent or reduce the generation of vibration and noise, a high rigidity of the rotor is desirable. Therefore, rotors of large thickness has been used and the whole rotor has been made of a casting with substantial thickness.

Thus, although the noise and vibration are reduced, the rotor has not only a large weight, but also a large moment of inertia. When such a generator is used in a vehicle, it causes not only an increase in vehicle weight, but also a drop in the acceleration and deceleration of the engine. Because electric power consumption has increased especially in the newer model vehicles the load of the generator is increased. The resulting generator tends to be larger in size and to have a larger capacity. This still further amplifies the weight and moment of inertia.

Document EP-A-1 094 145, which is a post-published document, discloses an electrical machine, namely a driving unit for a drum type washing machine. The rotor comprises an embossing which may be regarded as reinforcing ribs.

Document EP-A-0 887 908 shows a rotor of an electrical machine comprising ribs extending from a center to a circumferential part of the rotor, wherein at the end of the ribs at the circumferential part, the ribs are bent in the rotational direction and in the opposite direction.

Document EP-A-1 018 795 discloses a rotor as set out in the preamble of claim 1. In particular, this document shows the structure of a rotor for an outer rotor type brushless motor. The rotor comprises a cylindrical portion to which permanent magnets are attached, a center portion which can be attached to a rotable shaft. The center portion also connects the hub portion (i.e., the part of the center portion to which the shaft is to be connected) with the cylindrical portion. Moreover, enhancing ribs are provided in the interconnecting portion.

The machines of this type can generate substantial heat and this heat must be dissipated. This can be done by using fans or other auxiliary cooling structures. This brings with it further problems of weight and inertia, not to mention added cost.

Therefore it is an object of this invention to provide a rotor for a rotating electrical machine that is capable of effecting improved cooling property as well as its size reduction and capacity increase.

This object is solved by a rotor for a rotating electrical machine as set out in the independent claim 1.

Further advantageous developments are set out in the dependent claims.

In the following, the drawings are briefly described:
FIG. 1 is a cross sectional view of a rotating electrical machine constructed in accordance with a first embodiment of the invention.
FIG. 2 is a cross sectional view, in part similar to FIG. 1 but showing only the rotor used in the generator.
FIG. 3 is an end elevational view of the rotor.
FIG. 4 is an end elevational view of the opposite side of the rotor.
FIG. 5 is a sectional view taken along line 5-5 of FIG. 4.
FIG. 6 is a graph of coil temperature in relation to rotational speed comparing this embodiment with the prior art.
FIG. 7 is a cross sectional view, in part similar to FIG. 2, but of a rotor of another embodiment.
FIG. 8 is a cross sectional view, in part similar to FIG. 2, but of a rotor of an example not forming part of the invention.
FIG. 9 is a left side view of the example of Fig. 8
FIG. 10 is a right side view of the example of FIG. 8.
FIG. 11 is a cross sectional view taken along the line 11-11 of FIG. 10.

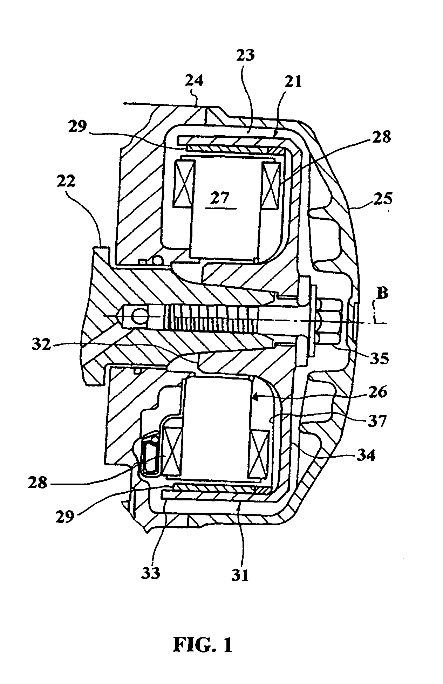

Referring first to the embodiment of FIGS.1-5, a rotating electrical machine such as a generator is indicated generally by the reference numeral 21. Although described as a generator, it will be readily apparent to those skilled in the art, the invention can be used equally with an electric motor.

The generator 21 is incorporated in an engine, shown only partially, for a motorcycle or the like, and is disposed and driven at one end of the engine crankshaft 22 (FIG. 1). In such an arrangement, the generator 21 is enclosed in a generator housing section 23 formed between a crankcase 24 of the engine and a generator cover 25 mounted to the crankcase 24.

One end of the crankshaft 22 protrudes from the crankcase 24 into the generator housing section 23. A stator 26 is fixedly supported on the crankcase 24 in surrounding relation to the protruding portion of the crankshaft 22.

The stator 26 is formed of radial magnetic pole teeth 27 of a stator core, and coils 28 wound thereon. In the case of a three-phase AC generator, the number of magnetic pole teeth 27 is a multiple of three, and for example, 9, 12, 15 and 18 poles are provided. The winding directions of the coils 28 of each phase are arranged to be normal or reverse corresponding to the magnetic poles of permanent magnets 29 of a rotor, indicated generally by the reference numeral 31 and to be described later, to which these coils 28 face so that voltages induced by the coils 28 of the same phase have the same polarity.

The rotor 31 is comprised of a hub section 32 fitted fixedly on the crankshaft 22, a cylindrical section 33 facing close to the outside circumference of the magnetic pole teeth of the stator 26, and a plate-like spoke section 34 for connecting the hub section 32 and the cylindrical section 26. In this embodiment, the hub section 32, spoke section 34 and cylindrical section 33 of the rotor 31 are integrally formed from a material like steel by cold forging or hot forging.

The hub section 32 is nonrotatably key-fitted on a tapered portion formed at one end of the crankshaft 22, and fixed axially to the crankshaft 22 by a bolt 35.

The permanent magnets 29 are bonded on the inside circumferential surface of the cylindrical section 33 and a small clearance is provided between the permanent magnets 29 and the outside circumference of the stator 26. The permanent magnets 29 are magnetized such that they have polarities changing circumferentially at regular intervals, that is, into twelve or sixteen poles.

The permanent magnets 29 used here are preferably neodymium-iron-boron magnets with high flux density. The magnets 29 have a very large flux density, so that their thickness can be decreased, which is suited for size reduction and weight saving of the generator 21. Between the permanent magnets 29 and the spoke section 34 is mounted a spacer 36 made of non-magnetic material.

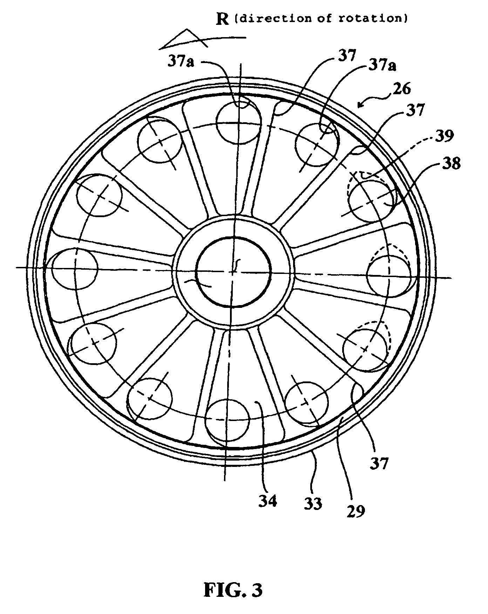

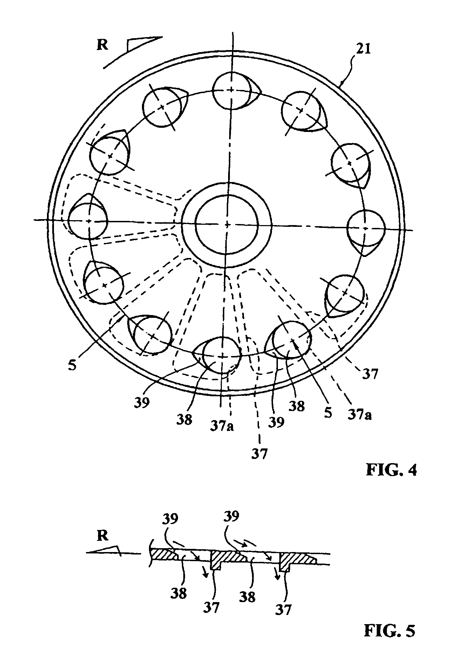

For stiffening purposes, a number of radial ribs 37 are formed on the inside surface of the spoke section 34, that is, on a surface on the stator 26 side. These ribs 37 extend from the hub section 32 to the cylindrical section 33. The ends 37a of the ribs 37 near the cylindrical section 33 are each bent in an arc in the rotational direction R (Figs. 3 and 4) of the rotor 31. The spoke section 34 is also formed with a number of windows 38 that extend therethrough in the direction of a rotation axis B of the rotor in a position close to but not interfering with the ribs 37 and particularly their curved portions 37a.

Groove-like slant faces 39 are formed on the surface of the spoke section 34 opposite to that on which the ribs 37 are provide. These groove-like slant faces 39 are formed at one side of the windows in the circumferential direction, configured such that they begin at the opening edges (leading side) of the windows 38 and their depths are gradually shallower in the rotational direction (R) of the rotor 26.

The generator 21 is air-cooled or liquid-cooled. In the case of liquid cooling, the whole generator is immersed in cooling oil. That is, cooling oil, for example engine lubricating oil, is circulated in the generator housing section 23. The cooling oil is preferably cooled down by an oil cooler or the like (not shown).

As is clear from Figs 3, 4, this embodiment has twelve ribs 37 and twelve windows 38, so that the number of magnetic poles of the magnets 29 fixed to the cylindrical section 33 is preferably twelve. However, it should be understood that the numbers of ribs 37 and windows 38 are not limited to that, but they may be changed depending on the number of magnetic poles of the permanent magnets or the like.

In this generator 21, rotation of the crankshaft 22 causes the rotor 31 to rotate in the direction (R). As a result of the rotation of the rotor 31, magnetic field produced by the permanent magnets 29 fixed to the cylindrical section 33 is rotated, which changes the number of magnetic fluxes passing through coils of the stator 26, resulting in induction of voltages in the coils. The permanent magnets 29 are subjected alternately to attractive and repulsive forces every time they move past different magnetic pole teeth while facing thereto. These forces form a vibration source to the cylindrical section 33, which could cause vibration of the entire rotor 31.

However since the cylindrical section 33 and the spoke section 34 of the rotor 31 are united in one body and the spoke section 34 is formed with the ribs 37 the rotor is stiffened. Thus, sufficiently large rigidity is effected for the united body of the cylindrical section 33 and the spoke section 34, so that vibration of the united body of the cylindrical section 33 and the spoke section 34 is restricted, decreasing noise associated with the vibration. This is also accomplished without unnecessarily increasing the total weight.

In addition, the formation and shape of the windows 38 causes cooling air or cooling oil in the generator housing 23 to be circulated inside the rotor 31, accelerating the cooling of the stator 26. Therefore, size reduction and capacity increase of the generator 21 is effected. In this case, the cooling air or the cooling oil which has entered the rotor 31, strikes against the ribs 37 is dispersed into surrounding areas. Thus, the ribs 37 have the function of enhancing cooling effects.

Because the opening edges of the windows on the opposite side from the ribs are formed slant faces 39 in the rotational direction (A) of the rotor, cooling air (oil) flows efficiently into the rotor 31 along the slant faces 39 as guides. Thus, improvement of cooling performance is further effected. Further, the ribs 37 are bent in the rotational direction (R) of the rotor at the ends on the cylindrical side, so that cooling air (oil) which has entered at the windows 38 is introduced radially inwardly of the rotor along the bent sections 37A as guides. Therefore, cooling air (oil) is possibly introduced successfully also to the rotor 31 near the hub section32, enabling improvement of the cooling property as well.

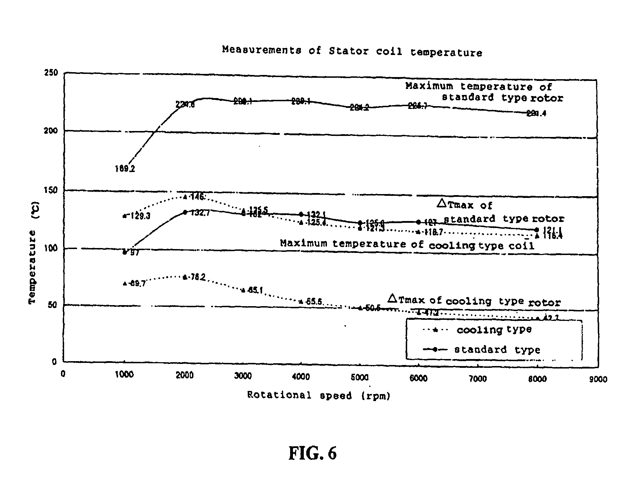

FIG. 6 illustrates the stator coil temperature, in comparison, of the case where ribs (37), windows (38) and slant faces (39) are provided according to this embodiment (cooling type, dash lines) and the case where no ribs, windows nor slant faces are provided (standard type, dash lines). In this case, measurement of the stator coil temperature is made on the generator 21 under the same load.

According to the result of the measurements, it can be seen that maximum temperature of the coil and ΔTₘₐₓ (rise of the coil temperature relative to the temperature of the mounting seat surface of the coil) are both considerably lower in the cooling type according to this invention than in the standard type.

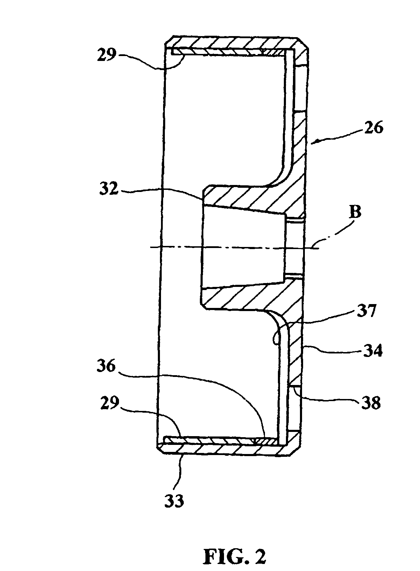

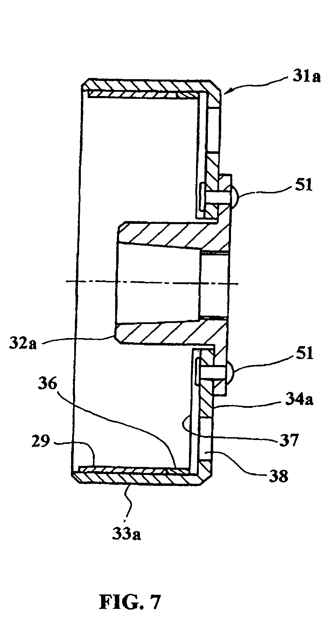

FIG. 7 illustrates a rotor of another embodiment. A rotor indicated generally at 31a is arranged such that a hub section 32a is separated from the united body of a cylindrical section 33a and a spoke section 34a, and both members are coupled with rivets 51. In this embodiment, the rotor 31a is divided into two members (32a and the united body of 33a and 34a) without decreasing the effect of this invention, thereby facilitating forming of each member. In FIG. 7, like parts as shown in FIG. 2 are designated by like reference numerals and further description is believed to be unnecessary to permit those skilled in the art to utilize this embodiment.

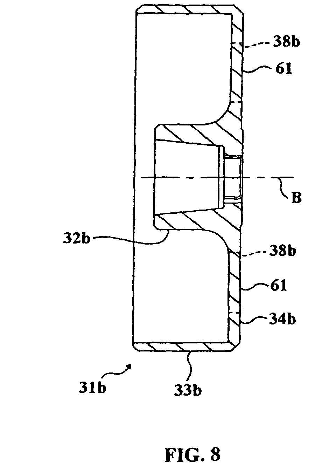

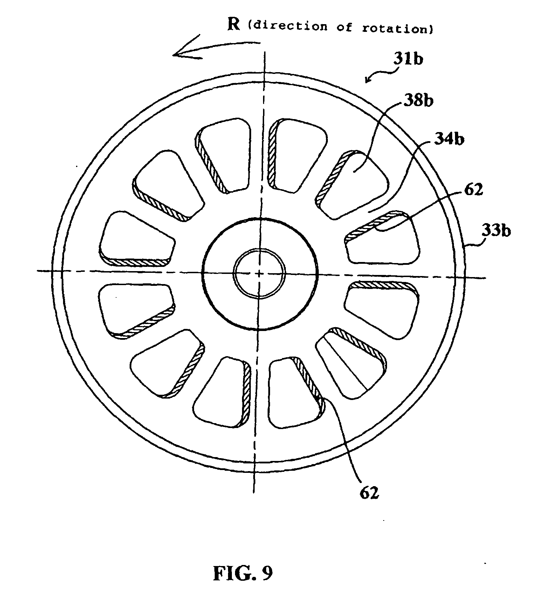

Referring now to FIGS. 8-11, a rotor constructed in accordance with an example not forming part of the present invention is indicated generally at 31b. The rotor 31b is similar to that of FIGS. 1-5 in that a hub section 32b, a cylindrical section 33b and a spoke section 34b are molded integrally. The spoke section 34b is formed with approximately fan-shaped twelve windows 38b at regular intervals in the circumferential direction.

As a result, between adjacent windows 38b are formed straight sections 61 extending approximately in the radial direction. These straight sections 61 act as stiffening ribs. On one edges of the straight sections 61 on the side in the leading side of the rotational direction of the rotor are formed, by chamfering, slant faces 62 in the longitudinal direction of the straight sections 61. That is, the slant faces 62 face to the outside of the rotor 31b.

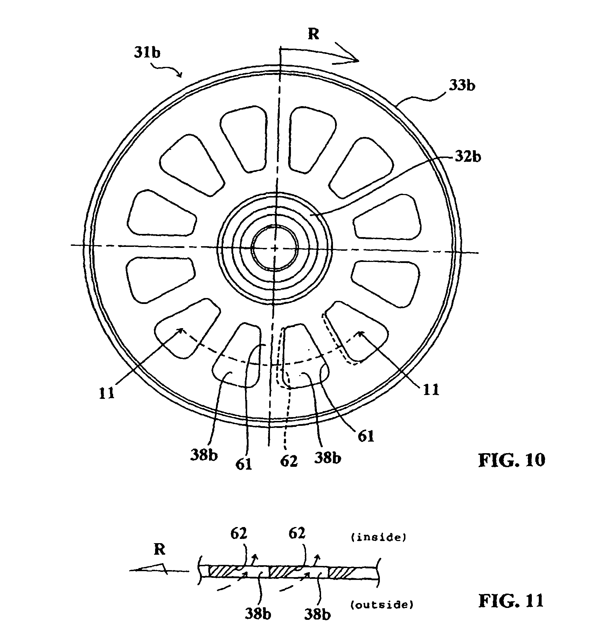

In this example, with the rotor 31b rotating in the direction of R, cooling air or cooling oil flows smoothly and efficiently into the rotor 31b along the slant faces 62 as guides. In FIG. 11, dash lines show the flow of the cooling air (oil). Therefore, cooling properties of the rotor 31b and the stator (not shown) enclosed in the rotor 31b is improved.

Thus it can be seen that in the disclosed embodiments ribs of the rotor extend approximately radially. Therefore, rigidity can be increased without need of increasing the weight and moment of inertia of the rotor, so that vibration of the stator is restricted as well as generation of noise. Also openings formed between the ribs permit coolant to flow from one side of the rotor to the other for cooling. Of course, the embodiments described are only preferred embodiments of the invention and various changes and modifications may be made without departing from the spirit and scope of the invention, as defined by the appended claims.

Several embodiments of rotors for rotating electrical machines configured to increase the stiffness without increasing the weight and to promote the flow of coolant across the rotor. This is achieved by utilizing stiffening ribs and flow openings in an intermediate portion of the rotor that interconnects the cylindrical portion that carries the permanent magnets and the hub section.

## Claims

1. A rotor for a rotating electrical machine, comprised of a cylindrical portion **(33)** carrying a plurality of spaced permanent magnets, a hub portion **(32)** adapted to be affixed to a rotatable shaft **(22),** an interconnecting portion **(34)** for interconnecting said cylindrical portion and said hub portions, and a plurality of reinforcing ribs **(37)** formed in said interconnecting portion,
**characterized in that**
the reinforcing ribs **(37)** comprise bent sections **(37A)** bent in the rotational direction of the rotor **(31),**
openings **(38)** are provided in the interconnecting portion **(34)** between the reinforcing ribs **(37),** for permitting a coolant to flow therethrough, and
the openings **(38)** are provided adjacent to the bent sections **(37A)** such that the bent sections **(37A)** are bent around the openings **(38)** for introducing the coolant radially inwardly of the rotor along the bent sections as guides.

2. A rotor for a rotating electrical machine as set forth in claim 1, **characterized in that** the cylindrical portion **(33)** and the interconnecting portion **(34)** are integral with each other.

3. A rotor for a rotating electrical machine as set forth in claim 2, **characterized in that** the hub portion **(32)** is integral with the remaining portions.

4. A rotor for a rotating electrical machine as set forth in claim 1, **characterized in that** the ribs **(37)** extend axially outwardly from a disk shaped portion extending radially inwardly from the cylindrical portion at one side thereof.

5. A rotor for a rotating electrical machine as set forth in claim 1, **characterized in that** the openings are circular and a side of the intermediate section adjacent each opening is relieved toward the opening.

6. A rotor for a rotating electrical machine as set forth in claim 1, **characterized in that** the openings **(38)** comprises slant faces **(39)** at one side of the openings **(38).**

7. A rotor for a rotating electrical machine as set forth in claim 6, **characterized in that** the slant faces **(39)** are provided on the surface of the interconnecting portion **(34)** opposite to that on which the reinforcing ribs **(37)** are provided.

8. A rotor for a rotating electrical machine as set forth in claim 7, **characterized in that** the slant faces **(39)** are provided on the side of the openings **(38)** opposite to the bent sections **(37A).**

## Patentansprüche

1. Rotor für eine sich drehende elektrische Maschine mit einem mehrere beabstandete Permanentmagnete tragenden zylindrischen Abschnitt (33), einem Nabenabschnitt (32) zur Befestigung an einer drehbaren Welle (22), einem Verbindungsabschnitt (34) zur Verbindung des zylindrischen Abschnitts und des Nabenabschnitts mit mehreren in dem Verbindungsabschnitt ausgebildeten Verstärkungsrippen (37)
**dadurch gekennzeichnet, dass**
die Verstärkungsrippen (37) in Drehrichtung des Rotors (31) gebogene Abschnitte (37A) umfassen, dass zwischen den Verstärkungsrippen (37) in dem Verbindungsabschnitt (34) Öffnungen (38) zum Durchströmen von Kühlmittel vorgesehen sind, und dass
die Öffnungen (38) so benachbart zu den gebogenen Abschnitten (37A) vorgesehen sind, dass die gebogenen Abschnitte (37A) rings um die Öffnungen (38) zum Zuführen des Kühlmittels radial zum Inneren des Rotors längs den als Führung dienenden gebogenen Abschnitten gebogen sind.

2. Rotor für eine sich drehende elektrische Maschine nach Anspruch 1,
**dadurch gekennzeichnet, dass**
der zylindrische Abschnitt (33) und der Verbindungsabschnitt (34) einstückig miteinander ausgebildet sind.

3. Rotor für eine sich drehende elektrische Maschine nach Anspruch 2,
**dadurch gekennzeichnet, dass**
der Nabenabschnitt (32) einstückig mit den restlichen Teilen ausgebildet ist.

4. Rotor für eine sich drehende elektrische Maschine nach Anspruch 1,
**dadurch gekennzeichnet, dass**
die Rippen (37) sich von einem von dem zylindrischen Abschnitt einseitig erstreckenden scheibenförmigen Abschnitt axial nach außen erstrecken.

5. Rotor für eine sich drehende elektrische Maschine nach Anspruch 1,
**dadurch gekennzeichnet, dass**
die Öffnungen kreisförmig ausgebildet sind, und dass eine Seite des mittleren Abschnitts benachbart zu jeder Öffnung in Richtung der Öffnung ausgespart ist.

6. Rotor für eine sich drehende elektrische Maschine nach Anspruch 1,
**dadurch gekennzeichnet, dass**
die Öffnungen (38) an einer Seite Schrägflächen (39) aufweisen.

7. Rotor für eine sich drehende elektrische Maschine nach Anspruch 6,
**dadurch gekennzeichnet, dass**
die Schrägflächen (39) auf der zu der Oberfläche auf der die Verstärkungsrippen (37) vorgesehen sind, gegenüberliegenden Oberfläche des Verbindungsabschnitts (34) vorgesehen sind.

8. Rotor für eine sich drehende elektrische Maschine nach Anspruch 7,
**dadurch gekennzeichnet, dass**
die Schrägflächen (39) auf der Seite der Öffnungen (39) gegenüber den gebogenen Abschnitten (37A) vorgesehen sind.

## Revendications

1. Rotor pour machine électrique tournante, se composant d'une partie cylindrique (33) supportant une pluralité d'aimants permanents espacés, d'une partie de moyeu (32) adaptée pour être fixée sur un arbre rotatif (22), d'une partie d'interconnexion (34) destinée à connecter entre elles ladite partie cylindrique et ladite partie de moyeu, et d'une pluralité de nervures de renfort (37) formées dans ladite partie d'interconnexion ;
**caractérisé en ce que**,
les nervures de renfort (37) comprennent des sections courbes (37A) courbées dans la direction de la rotation du rotor (31) ;
des ouvertures (38) sont aménagées dans la partie d'interconnexion (34) entre les nervures de renfort (37), afin de permettre l'écoulement d'un fluide de refroidissement au travers de celles-ci ; et
les ouvertures (38) sont aménagées à proximité des sections courbes (37A) de telle sorte que les sections courbes (37A) sont courbées autour des ouvertures afin de permettre l'introduction le fluide de refroidissement à l'intérieur du rotor dans le sens radial le long des sections courbes qui servent de guides.

2. Rotor pour machine électrique tournante selon la revendication 1, **caractérisé en ce que** la partie cylindrique (33) et la partie d'interconnexion (34) sont incorporées l'une à l'autre.

3. Rotor pour machine électrique tournante selon la revendication 2, **caractérisé en ce que** la partie de moyeu (32) est incorporée aux parties restantes.

4. Rotor pour machine électrique tournante selon la revendication 1, **caractérisé en ce que** les nervures (37) s'étendent vers l'extérieur dans le sens axial à partir d'une partie en forme de disque qui s'étend vers l'intérieur dans le sens radial à partir de la partie cylindrique sur un côté de celle-ci.

5. Rotor pour machine électrique tournante selon la revendication 1, **caractérisé en ce que** les ouvertures sont circulaires et qu'un côté de la section intermédiaire situé à proximité de chaque ouverture est dépouillé vers l'ouverture.

6. Rotor pour machine électrique tournante selon la revendication 1, **caractérisé en ce que** les ouvertures (38) comprennent des faces obliques (39) sur un côté des ouvertures (38).

7. Rotor pour machine électrique tournante selon la revendication 6, **caractérisé en ce que** les faces obliques (39) sont aménagées à la surface de la partie d'interconnexion (34) en opposition à la surface sur laquelle sont aménagées les nervures de renfort (37).

8. Rotor pour machine électrique tournante selon la revendication 7, **caractérisé en ce que** les faces obliques (39) sont aménagées sur le côté des ouvertures (38) en opposition aux sections courbes (37A).
